# FASCICULE DE BREVET EUROPEEN

(11) **EP 2 462 644 B1**
(45) Date de publication et mention de la délivrance du brevet: **03.12.2014**
(21) Numéro de dépôt: 10735020.9
(22) Date de dépôt: 28.07.2010
(51) Int. Cl.: H01M 4/86, H01M 8/12, H01M 8/02, H01M 4/88, C25B 1/04

(54) **Cellule électrochimique à metal support et son procédé de fabrication**
Elektrochemische Zelle mit einem Metallsubstrat und Verfahren zu ihrer Herstellung
Electrochemical cell having a metal substrate, and method for manufacturing same

(30) Priorité: 03.08.2009 FR 0955461
(43) Date de publication de la demande: 13.06.2012
(73) Titulaire: Commissariat à l'Énergie Atomique et aux Énergies Alternatives, 75015 Paris (FR)
(72) Inventeur: LAUCOURNET, Richard, F-38500 La Buisse (FR); DELAHAYE, Thibaud, F-38950 Saint Martin Le Vinoux (FR)
(74) Mandataire: Ilgart, Jean-Christophe
(86) Numéro de dépôt international: PCT/EP2010/060978
(87) Numéro de publication internationale: WO 2011/015505

(56) Documents cités:
- EP-A1- 1 850 412
- EP-A2- 1 793 444
- EP-A2- 1 806 805
- US-A1- 2007 269 701
- US-A1- 2009 035 635

## Description

### DOMAINE TECHNIQUE

L'invention concerne une cellule électrochimique à métal support (« MSC » ou « Metal-Supported Cell » en langue anglaise).

L'invention concerne en outre un procédé de fabrication d'une cellule électrochimique à métal support.

Le domaine technique de l'invention peut être défini de manière générale comme celui des nouvelles technologies de l'énergie visant notamment à réduire les émissions de gaz à effet de serre ou à promouvoir les sources d'énergie propres et renouvelables.

Le domaine technique de l'invention peut être défini, plus particulièrement, comme celui des cellules électrochimiques, et plus précisément des cellules électrochimiques à métal support destinées à des applications à hautes températures, généralement de 600°C à 900°C. Ces cellules électrochimiques peuvent être des cellules pour électrolyseur de vapeur d'eau à haute température (« EHT » ou « HTE » en langue anglaise) pour la production massive d'hydrogène, ou bien des cellules de type pile à combustible à haute température (« SOFC » ou « Solid Oxide Fuel Cell » en langue anglaise) qui sont alimentées avec de l'hydrogène ou divers combustibles naturels tels que le gaz naturel ou les gaz issus de la biomasse.

Dans le domaine de la production d'hydrogène, les premiers secteurs visés sont ceux du reformage et de la gazéification (hydrogénation) de combustibles primaires carbonés tels que le charbon et les hydrocarbures lourds, et la pétrochimie traditionnelle. Il s'agit là de secteurs de production à grande échelle.

Les seconds secteurs visés sont ceux qui s'inscrivent dans l'optique d'un développement de l'hydrogène comme source d'énergie, avec en particulier des applications dans le domaine dit du stationnaire à travers le développement de systèmes fonctionnant en cogénération implantés notamment dans des habitations collectives. En outre, dans le domaine de la SOFC, la technologie dite stationnaire peut aussi permettre le fonctionnement avec du gaz naturel/gaz de ville ou avec du gaz provenant d'autres sources (biogaz issu de décharges ou de boues de station d'épuration, gaz issu de la biomasse, etc.) d'un système de cogénération, qui présente un haut rendement global, pouvant dépasser 70%.

### ÉTAT DE LA TECHNIQUE ANTÉRIEURE

Les demandes de brevet EP1806805, EP1850412, EP1793444 et US2007/0269701 divulguent des piles à combustible SOFC comprenant un support métallique poreux.

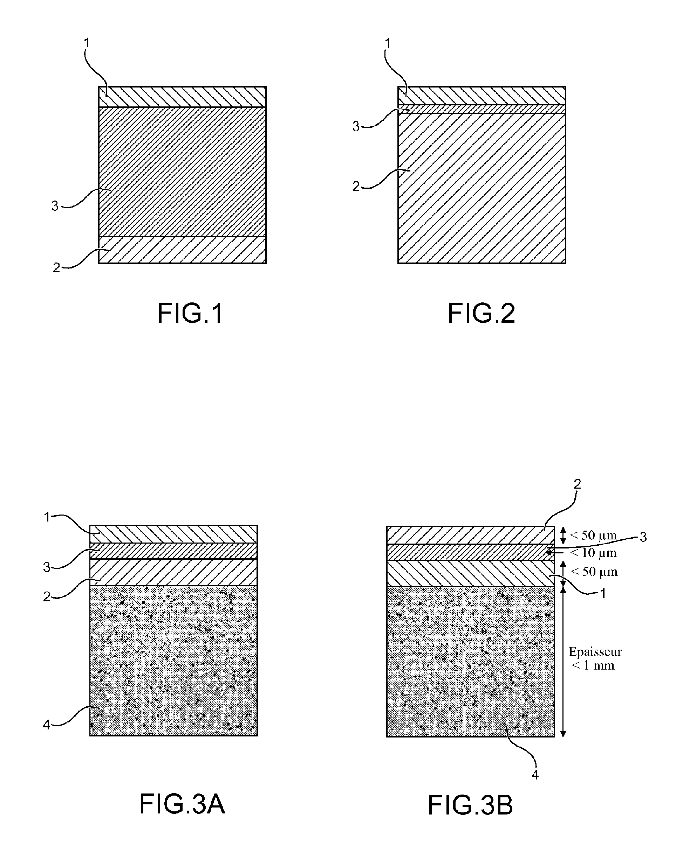

La première génération de cellules d'électrolyseur haute température ou de piles à combustible haute température comprenait un support formé par l'électrolyte et était ainsi dénommée Cellule à électrolyte support (« ESC » ou « Electrolyte-Supported Cell » en langue anglaise). Une telle cellule à électrolyte support est représentée sur la figure 1 : l'électrode à oxygène O₂ (1) et l'électrode à hydrogène ou à eau (2) sont disposées de part et d'autre de l'électrolyte épais qui constitue le support mécanique (3) .

La deuxième génération de cellules d'électrolyseur haute température ou de piles à combustible haute température comprenait un support formé par une électrode et était ainsi dénommée Cellule à anode support (« ASC » ou « Anode-Supported Cell » en langue anglaise) en terminologie « SOFC » ou Cellules à cathode support (« CSC » ou « Cathode-Supported Cell » en langue anglaise) en terminologie « EHT ». Une telle cellule à électrode support « ASC » ou « CSC » est représentée sur la figure 2 : l'électrolyte (3) et l'électrode à oxygène (1) sont disposés sur l'électrode épaisse à hydrogène ou à eau (2) qui sert de support mécanique.

La troisième génération de cellules d'électrolyseur haute température ou de piles à combustible haute température, à laquelle nous nous intéressons plus particulièrement dans la présente comprend un support métallique poreux et est donc dénommée cellule à métal support (« MSC »). Une telle cellule à métal support peut se présenter selon deux configurations qui sont respectivement représentées sur les figures 3A et 3B selon que l'électrode qui est placée au contact du support métallique poreux est l'électrode à hydrogène ou à eau (2) (figure 3A) ou bien l'électrode à oxygène encore dénommée électrode à air (1) (figure 3B). Il est à noter que les dimensions (épaisseurs) mentionnées sur la figure 3B ne sont données qu'à titre d'exemple. Les cellules à métal support représentées sur les figures 3A et 3B comportent quatre couches (dont une couche métallique et trois couches en céramique), à savoir :
- le support métallique poreux (4), généralement d'une épaisseur de quelques mm, voire inférieure à 1 mm qui assure :
   ∘ le support mécanique de la cellule grâce à ses propriétés mécaniques et à son épaisseur,
   ∘ la distribution des gaz, grâce à sa porosité, jusqu'à l'électrode en vue des réactions électrochimiques,
   ∘ le collectage ou la distribution du courant grâce à sa nature métallique conductrice électronique.
- l'électrode H₂/H₂O (2) qui est l'anode en mode SOFC, et la cathode en mode EHT. Grâce au support métallique (4) cette électrode peut être rendue plus mince, avec par exemple une épaisseur de 40 à 100 µm, sa tenue aux cycles redox est ainsi meilleure et son coût est moins élevé ;
- l'électrolyte (3), conducteur ionique pour les ions O²⁻. L'électrolyte (3) peut être rendu plus mince, avec par exemple une épaisseur inférieure à 50 µm par exemple de 10 à 30 µm, sa température de fonctionnement peut ainsi être abaissée ;
- l'électrode à O₂ aussi appelée électrode à air (1) qui est la cathode en mode SOFC, et l'anode en mode EHT. Cette électrode (1) présente une épaisseur typiquement comprise entre 40 et 80 µm.

Dans une structure type d'une cellule électrochimique à métal support, le support métallique peut avoir une épaisseur de quelques mm, l'électrode à hydrogène une épaisseur de 40 à 100 µm, l'électrolyte une épaisseur de 10 à 30 µm, et l'électrode à air une épaisseur de 40 à 80 µm.

Le concept de cellule « métal support » (« MSC ») qui utilise un support mécanique en métal sur lequel est déposée la cellule électrochimique de faible épaisseur est ainsi susceptible d'apporter de nombreux avantages par rapport aux générations antérieures de cellules de type « électrolyte support » ou « électrode support ».

Les quantités de matières céramiques, les plus coûteuses, sont en effet réduites au maximum et les performances sont plus élevées car l'épaisseur de l'électrolyte, le composant le plus résistif, est faible et généralement inférieure à 50 µm.

L'électrode à hydrogène étant plus fine que dans les cellules à électrode support, elle est moins sensible à la dégradation par cyclage « rédox ».

Le support métallique, très bon conducteur thermique et électrique, évite tout écart de température dans les axes X-Y de la cellule et assure aussi une bonne collecte du courant.

La résistance aux cycles thermiques est également améliorée par la bonne tenue mécanique et la bonne distribution de température en raison d'une faible inertie thermique. Le support mécanique est très facile à souder ou à raccorder aux interconnecteurs pour réaliser des empilements.

Le recours à un support métallique, en plus des bénéfices techniques attendus et précédemment exposés, apporte en outre un avantage économique important. Un calcul technico-économique [1] conclut qu'un module à 37 $/kWe est envisageable avec ce concept de cellule et des procédés d'élaboration à bas coût.

De plus, en raison de la température de fonctionnement visée, à savoir de 600-750°C, les contraintes portant sur les matériaux d'interconnexion et l'étanchéité des systèmes futurs utilisant ce type de cellules pourront être allégées, et par voie de conséquence les coûts de ces systèmes seront également diminués.

Afin de respecter la viabilité économique de ce type de cellule à métal support, les procédés d'élaboration utilisés se doivent de présenter des faibles coûts d'investissement et de fonctionnement, et doivent permettre l'augmentation d'échelle des cellules lors de leur industrialisation future. L'un des principaux défis de la cellule à « métal support » est d'effectuer le dépôt des couches de céramique sur le substrat métallique en utilisant un procédé qui ne modifie pas la microstructure du substrat métallique.

Quelques équipes dans le monde ont commencé à développer des cellules « SOFC » de troisième génération de type « métal support ».

Néanmoins à ce jour, peu de travaux concernent l'utilisation des cellules à métal support en mode « EHT ». Seul le projet européen Hi₂H₂ mentionne des travaux d'évaluation en EHT de cellules de type « métal support » [2].

Les documents [3] et [4] font mention de l'utilisation d'une technique de projection plasma sous vide pour déposer les composants de la cellule sur un support métallique poreux fait à base d'un alliage à base de chrome.

Les principaux avantages avancés pour cette technologie sont la possibilité de réaliser les trois couches en une seule opération, sans frittage et dans des conditions atmosphériques non oxydantes qui protègent le support métallique de toute oxydation.

Cependant, une grande enceinte sous vide est nécessaire, ce qui rend ce procédé difficilement applicable à une production de masse, et le rend également moins intéressant dans une perspective de réduction des coûts.

Ce procédé exige également une optimisation paramétrique conséquente et complexe afin de garantir les caractéristiques microstructurales désirées, notamment la maîtrise de la porosité, ainsi que le bon respect de la composition des électrodes composites.

Dans la plupart des cas, on peut noter d'ailleurs la présence de défauts microstructuraux tels que fissures et porosités dans l'électrolyte, et donc l'apparition de contraintes qui conduisent à la rupture de l'électrolyte lors du fonctionnement à température élevée [5]. De plus, il est difficile de préparer un électrolyte d'une épaisseur inférieure à 50 µm et la présence de porosité résiduelle pénalise fortement la conductivité ionique extrinsèque de cet élément et donc les performances globales de la cellule [6].

La réduction des coûts de ce type de cellule a été visée par le projet européen CexiCell. Lors de leur élaboration, l'anode en Ni-YSZ et l'électrolyte en YSZ sont déposés, par projection au plasma atmosphérique (APS), qui est une technique plus adaptée à la production de masse [7], sur un substrat poreux d'alliage métallique base Cr-Fe. La cathode à base de LSCF est enduite sur l'électrolyte et frittée *in situ* au cours du démarrage de la cellule.

Les travaux menés dans ce projet ont mis en évidence la présence de défauts au niveau de l'interface entre le poreux métallique et l'anode, pénalisant ainsi les performances globales de la cellule. Des microfissures ont également été observées dans l'électrolyte [8]. Des optimisations ont été réalisées permettant d'atteindre les densités de puissance de 500 mW/cm² à 800°C [9]. Néanmoins, les performances de ces cellules SOFC diminuent rapidement, à savoir autour de 130% / 1000 h après seulement 24 heures d'utilisation. Cette dégradation est trop rapide pour le transport et encore plus pour les applications stationnaires. Le mécanisme de dégradation a été examiné et il semble que l'inter-diffusion entre les éléments de l'acier ferritique du substrat poreux et le nickel de l'anode joue un rôle majeur dans la forte dégradation observée à cette température.

Dans les documents [10], [11] et [12], le National Research Council du Canada a également étudié le concept de cellule à métal support « MSC », notamment en ayant recours aux procédés de projection au plasma de suspensions (« Suspension Plasma Spraying » ou SPS en Anglais), et au dépôt par laser pulsé (« Pulsed Laser Deposition ou PLD en Anglais) pour élaborer l'électrolyte dense. Le procédé « PLD » permet l'obtention d'électrolytes denses de faible épaisseur, à savoir par exemple 20 µm, contrairement à la technique « SPS ».

Cependant, le procédé « PLD » présente l'inconvénient de nécessiter une chambre sous vide, et la durée de dépôt est peu compatible avec une production massive de cellules. De plus, le procédé d'élaboration de la cellule nécessite dans sa globalité plusieurs étapes de traitement thermique qui rendent la cellule non viable économiquement.

L'institut de recherche allemand Jülich s'est également intéressé à la fabrication de cellules « MSC », notamment avec le procédé de projection thermique nommé plasma atmosphérique « VPS » [13] pour le dépôt de l'anode et de l'électrolyte sur le support métallique. Les performances mesurées sur les cellules montrent un vieillissement rapide. La microstructure obtenue de l'anode de type cermet (NiO/YSZ) est loin de posséder une densité de lignes triples (sites réactionnels) nécessaire à l'obtention de performances électrochimiques élevées.

Dans le document [14], et afin de développer des cellules « MSC », le Lawrence Berkeley National Laboratory (LBNL), a utilisé dans un premier temps un procédé basé sur le co-frittage de films minces d'électrode et d'électrolyte sur un poreux métallique commercial d'acier inoxydable ferritique préfritté, à 400°C sous atmosphère réductrice. Dans ce cas, l'anode (NiO/YSZ) et l'électrolyte (YSZ) sont déposés en utilisant des techniques dites par voie «humide» telles que le coulage en bande ou la pulvérisation. La cathode en LSCF/Pt est appliquée sous forme de pâte et est frittée *in situ* lors du chauffage de la cellule. Par la suite, comme cela est décrit dans le document [15], il a été procédé à une optimisation du support métallique, et notamment de son coefficient de dilatation thermique (« CET ») en associant à la base métallique (Fe30Cr), une céramique (AlₓTi_{y}O_{z}) à faible CET afin d'ajuster le CET global du substrat métallique et des matériaux céramiques à celui des autres composants de la cellule. Le procédé était décomposé en 4 étapes d'assemblage des composants les uns avec les autres intégrant chacune un traitement thermique à des températures et conditions atmosphériques différentes rendant extrêmement lourde l'élaboration de la cellule.

Les brevets [16], [17], et [18] issus des travaux de ce laboratoire exposent une méthode d'obtention d'un électrolyte dense par co-frittage avec une électrode à air (LSM, LSC, LSCF, SmₓSr_{y}CoO₃,...). Par la suite, ce même laboratoire a effectué des recherches sur un autre procédé de fabrication d'une cellule « MSC » afin de réduire le nombre de traitements thermiques d'élaboration. Ce procédé de fabrication [19] consiste tout d'abord à réaliser le co-frittage à 1300°C en atmosphère réductrice, d'un multicouche composé du support métallique avec une couche de zircone poreuse, une couche de zircone dense et une seconde couche de zircone poreuse. Puis on infiltre les deux couches poreuses par des précurseurs en solution de Ni et de LSM respectivement pour l'électrode à H₂ et l'électrode à air et on calcine la cellule à 650°C pour convertir les précurseurs en oxyde. Cependant, dans ce procédé, si le nombre d'étapes de traitement thermique est limité, il est nécessaire de procéder à plusieurs cycles d'infiltration, séchage pour atteindre les teneurs désirées en Ni et LSM, ce qui alourdit grandement le procédé. De plus, les particules de nickel issues de ce procédé possèdent une taille très faible comprise entre 40 et 100 nm. Cette finesse se traduit en fonctionnement par un vieillissement rapide de l'anode dû à la coalescence des particules et par conséquent à une chute rapide des performances électrochimiques [20]. Les cellules élaborées par ce procédé sont tubulaires et de petites dimensions avec une longueur de 1 cm et un diamètre de 1 cm.

Le Laboratoire Argonne a également développé des cellules MSC en ayant recours à un procédé de co-frittage des matériaux [21]. Le support métallique est réalisé par coulage en bande, puis on dépose successivement l'anode et l'électrolyte sur le support, un séchage étant effectué après chaque étape de dépôt. L'ensemble est ensuite porté à 1300°C en observant un protocole nécessitant plusieurs atmosphères (oxydante, neutre et réductrice), et la cathode (LSCF) est déposée et frittée *in situ* lors du démarrage de la cellule. La principale limite de ce procédé est la faible dimension des cellules produites, avec un diamètre inférieur à 15 mm, ce qui conduit à une production d'énergie unitaire très faible pour un encombrement par unité de surface très important.

Une autre possibilité pour éviter la haute température de frittage est de sélectionner des matériaux appropriés permettant un frittage à plus basse température.

Cette stratégie a été adoptée par la société Ceres Power, qui a mis au point une technique qui utilise un électrolyte à base de cérine substituée au gadolinium (CGO) au lieu de la zircone yttriée (YSZ). En effet, alors que la température de frittage de la zircone est d'environ 1350°C, un électrolyte dense à base de cérine peut être obtenu par dépôt électrolytique puis frittage à une température d'environ 1000°C par ajouts de dopants tels que les cations divalents comme Cu²⁺, Ni²⁺ ou Co²⁺ [22]. Cette société a démontré qu'il était possible de fabriquer des cellules SOFC à métal support par cette technique [23], [24].

Le procédé proposé consiste à déposer par exemple sur un substrat métallique poreux la cathode (LSM, LSCF, GSC, ...) et l'électrolyte (CGO) par sérigraphie ou coulage en bande, puis à fritter l'ensemble sous argon à 950°C, puis à déposer l'anode (NiO/CGO) et à fritter l'ensemble à 1000°C sous atmosphère réductrice. Cependant, même si la densification de l'électrolyte s'avère intéressante, en raison de l'utilisation de CGO comme matériau d'électrolyte, la température de fonctionnement est réduite à 500-600°C pour éviter le caractère conducteur électronique de CGO qui apparaît pour les températures supérieures. Cette faible température de fonctionnement induit une corrosion plus faible du support métallique de la cellule ainsi que des interconnecteurs de la pile, mais les performances des cellules sont par conséquent assez faibles [25], par exemple d'environ 300 mW/cm² à 600°C sous hydrogène. De plus, le procédé nécessite plusieurs étapes de traitement thermique dans des conditions atmosphériques différentes, neutres ou réductrices.

Les sociétés DTU-Risoe et Topsoe Fuel Cell (TOFC) ont également développé des cellules de type « métal support » [26] en visant la gamme de températures de fonctionnement de 600 à 750°C. Les composants électrochimiques de la cellule (électrodes et électrolyte) sont déposés par pulvérisation, sérigraphie ou jet d'encre. Cependant, la stratégie de consolidation thermique n'est pas précisée, ni même les atmosphères mises en oeuvre. Le support métallique présente des cavités et perforations pour l'alimentation en gaz.

Il existe donc, au regard de l'étude qui précède, un besoin pour des cellules électrochimiques à métal support pouvant fonctionner aussi bien en mode pile à combustible qu'en mode électrolyseur, dans une gamme de températures élevées, généralement de 600 à 1000°C et qui présentent d'excellentes performances électrochimiques.

Il existe notamment un besoin pour une cellule de pile à combustible qui présente les performances électrochimiques suivantes :
- En mode pile à combustible « SOFC » : température de fonctionnement 700°C, puissance supérieure à 600 mW/cm².
- En mode électrolyseur à haute température « EHT » : température de fonctionnement 700°C, puissance supérieure à 1 W/cm².

Il existe encore un besoin pour une telle cellule qui puisse présenter des dimensions significatives, par exemple supérieures ou égales à 100 cm² permettant sa commercialisation et son intégration dans des systèmes de puissance.

Il existe plus particulièrement un besoin pour une cellule qui, lors de son fonctionnement ne présente pas les problèmes fréquemment rencontrés avec les cellules à métal support classiques tels que la diffusion du chrome vers l'anode causant l'empoisonnement de celle-ci, et la diffusion du nickel vers le support métallique avec l'apparition de phases austénitiques à fort coefficient de dilatation thermique.

Il existe aussi un besoin pour un procédé qui permette de préparer une cellule présentant toutes les propriétés énumérées plus haut, ce procédé étant simple, fiable, avantageux d'un point de vue économique, et assurant notamment l'assemblage de composants de natures différentes tels que les métaux, les céramiques et les cermets.

Il existe plus particulièrement un besoin pour un procédé qui permette d'éviter les problèmes fréquemment rencontrés lors de l'élaboration d'une cellule à support métallique tels que l'oxydation du métal, la réduction des phases constitutives de l'électrode à air, et l'apparition des phases parasites provenant de la réaction entre le matériau d'électrode à air et le matériau d'électrolyte tel que de la zircone stabilisée.

Le but de la présente invention est de fournir une cellule électrochimique à métal support et un procédé de préparation de cette cellule qui répondent entre autres aux besoins énumérés plus haut.

Le but de la présente invention est encore de fournir une cellule électrochimique à métal support et un procédé de préparation de cette cellule qui ne présentent pas les inconvénients, défauts, limitations et désavantages des cellules à métal support et des procédés de préparation de cellules à métal support de l'art antérieur et qui apportent une solution aux problèmes présentés par les cellules et procédés de préparation de cellules de l'art antérieur.

### EXPOSÉ DE L'INVENTION

Ce but, et d'autres encore, sont atteints, conformément à l'invention par une cellule électrochimique à métal support comprenant :
- un support en métal poreux comportant une première surface principale et une seconde surface principale ;
- une couche poreuse d'adaptation thermomécanique sur ladite seconde surface principale ;
- une couche poreuse, barrière à la diffusion du chrome, sur ladite couche poreuse d'adaptation thermomécanique, cette couche poreuse, barrière à la diffusion du chrome, étant en zircone stabilisée et/ou en cérine substituée, et en un oxyde mixte de structure spinelle ;
- une couche poreuse d'électrode à hydrogène sur ladite couche poreuse barrière à la diffusion du chrome ;
- une couche dense d'électrolyte sur ladite couche poreuse d'électrode à hydrogène ;
- une couche barrière de réaction, dense ou poreuse, sur ladite couche dense d'électrolyte ;
- une couche poreuse d'électrode à oxygène ou à air sur ladite couche barrière de réaction.

Avantageusement, la première surface principale et la seconde surface principale peuvent être des surfaces planes et parallèles.

Avantageusement, la première surface principale peut être une surface inférieure et la seconde surface principale peut être une surface supérieure, et les couches sont successivement empilées sur la seconde surface principale.

Généralement, la porosité du support en métal poreux et des couches poreuses peut être de 20 à 70%, de préférence de 20 à 60% en volume et la porosité de la ou des couche(s) dense(s) telle(s) que la couche d'électrolyte peut être inférieure à 6% en volume.

Avantageusement, la distance entre la première surface principale et la deuxième surface principale du support en métal poreux, que l'on peut définir comme l'épaisseur du support en métal poreux, peut être inférieure ou égale à 1 mm, de préférence elle peut être de 200 µm à 1000 µm, de préférence encore, elle peut être de 400 µm à 500 µm.

Avantageusement, le support en métal poreux est en un métal choisi parmi le fer, les alliages à base de fer, le chrome, les alliages à base de chrome, les alliages fer-chrome, les aciers inoxydables, par exemple les aciers inoxydables chromoformeurs comme l'acier inoxydable de référence K41X produit par ARCELOR MITTAL^{®}, le nickel, les alliages à base de nickel, les alliages nickel chrome, les alliages contenant du cobalt, les alliages contenant du manganèse, les alliages contenant de l'aluminium.

Avantageusement, la couche poreuse d'adaptation thermomécanique peut être en un métal, de préférence identique au métal du support en métal poreux, et en un conducteur ionique tel que la zircone stabilisée et/ou la cérine substituée.

Avantageusement, la couche poreuse d'électrode à hydrogène peut être en un mélange de NiO et de zircone stabilisée et/ou de cérine substituée.

Avantageusement, la couche dense d'électrolyte peut être en zircone stabilisée.

Avantageusement, la couche barrière de réaction peut être en cérine substituée.

Avantageusement, la couche poreuse d'électrode à oxygène ou à air peut être en cérine substituée et en un matériau d'électrode à oxygène ou à air.

La cellule électrochimique à métal support selon l'invention comprend une combinaison spécifique d'un support en métal et de couches spécifiques qui n'a jamais été décrite dans l'art antérieur.

La cellule électrochimique selon l'invention répond aux besoins mentionnés plus haut et apporte une solution aux problèmes des cellules électrochimiques de l'art antérieur cités ci-dessus.

En outre, la cellule électrochimique selon l'invention peut être préparée par un procédé simple, fiable et d'un coût peu élevé.

L'invention concerne, en outre, un procédé de préparation d'une cellule électrochimique à métal support et notamment d'une cellule telle que décrite ci-dessus.

Ainsi, l'invention concerne un procédé de préparation d'une cellule électrolytique à métal support comprenant :
- un support en métal poreux comportant une première surface principale et une seconde surface principale ;
- une couche poreuse d'adaptation thermomécanique sur ladite seconde surface principale ;
- éventuellement, une couche poreuse, barrière à la diffusion du chrome, sur ladite couche poreuse d'adaptation thermomécanique ;
- une couche poreuse d'électrode à hydrogène sur ladite couche poreuse barrière à la diffusion du chrome ;
- une couche dense d'électrolyte sur ladite couche poreuse d'électrode à hydrogène ;
- une couche barrière de réaction dense ou poreuse, sur ladite couche dense d'électrolyte ;
- une couche poreuse d'électrode à oxygène ou à air sur ladite couche barrière de réaction ;
procédé dans lequel :
a) on prépare un support en métal poreux cru ; puis
b) on dépose successivement à l'état cru sur la seconde surface principale du support en métal poreux cru :
   - une couche poreuse d'adaptation thermomécanique ;
   - éventuellement, une couche poreuse, barrière à la diffusion du chrome;
   - une couche poreuse d'électrode à hydrogène ;
   - une couche dense d'électrolyte ;
   - une couche barrière de réaction dense ou poreuse; et
   - une couche poreuse d'électrode à air ;
c) on procède au frittage simultané, en une seule fois, du support en métal poreux cru, et de toutes les couches à l'état cru déposées.

Avantageusement, la préparation du support en métal poreux et le dépôt des couches peuvent être effectués par un procédé choisi parmi le pressage, le thermopressage, le coulage en bande, la sérigraphie, la pulvérisation et l'enduction centrifuge.

Avantageusement, l'étape de frittage c) est réalisée sous une atmosphère contrôlée, par exemple une atmosphère très faiblement oxydante.

Avantageusement l'étape c) est réalisée à une température de 600 à 1600°C, de préférence de 800 à 1400°C.

Avantageusement, l'étape de frittage c) peut comprendre une étape de déliantage sous air puis une étape de frittage proprement dit sous une atmosphère contrôlée, par exemple une atmosphère très faiblement oxydante.

Avantageusement, dans le procédé selon l'invention, la cellule électrochimique à métal support fabriquée est une cellule dans laquelle la première surface principale et la seconde surface principale peuvent être des surfaces planes et parallèles.

Avantageusement, dans le procédé selon l'invention, la cellule électrochimique à métal support fabriquée est une cellule dans laquelle la première surface principale peut être une surface inférieure et la seconde surface principale peut être une surface supérieure, et les couches peuvent être successivement empilées sur la seconde surface principale.

Avantageusement, dans le procédé selon l'invention, la cellule électrochimique à métal support fabriquée est une cellule dans laquelle la porosité du support en métal poreux et des couches poreuses est de 20 à 70%, de préférence de 20 à 60% en volume, et la porosité de la ou des couche(s) dense(s) est inférieure à 6% en volume.

Avantageusement, dans le procédé selon l'invention, la cellule électrochimique à métal support fabriquée est une cellule dans laquelle la distance entre la première surface principale et la deuxième surface principale du support en métal poreux est inférieure ou égale à 1 mm, de préférence elle est de 200 à 1000 µm, de préférence encore de 400 à 500 µm.

Avantageusement, dans le procédé selon l'invention, la cellule électrochimique à métal support fabriquée est une cellule dans laquelle le support en métal poreux est en un métal choisi parmi le fer, les alliages à base de fer, le chrome, les alliages à base de chrome, les alliages fer-chrome, les aciers inoxydables par exemple les aciers inoxydables chromoformeurs, le nickel, les alliages à base de nickel, les alliages nickel chrome, les alliages contenant du cobalt, les alliages contenant du manganèse, les alliages contenant de l'aluminium.

Avantageusement, dans le procédé selon l'invention, la cellule électrochimique à métal support fabriquée est une cellule dans laquelle la couche poreuse d'adaptation thermomécanique est en un métal, de préférence identique au métal du support en métal poreux, et en un conducteur ionique tel que la zircone stabilisée et/ou la cérine substituée.

Avantageusement, dans le procédé selon l'invention, la cellule électrochimique à métal support fabriquée est une cellule dans laquelle la couche poreuse, barrière à la diffusion du chrome, est en zircone stabilisée et/ou en cérine substituée, et en un oxyde mixte de structure spinelle.

Avantageusement, dans le procédé selon l'invention, la cellule électrochimique à métal support fabriquée est une cellule dans laquelle la couche poreuse d'électrode à hydrogène est en un mélange de NiO, et de zircone stabilisée et/ou de cérine substituée.

Avantageusement, dans le procédé selon l'invention, la cellule électrochimique à métal support fabriquée est une cellule dans laquelle la couche dense d'électrolyte est en zircone stabilisée.

Avantageusement, dans le procédé selon l'invention, la cellule électrochimique à métal support fabriquée est une cellule dans laquelle la couche barrière de réaction est en cérine substituée.

Avantageusement, dans le procédé selon l'invention, la cellule électrochimique à métal support fabriquée est une cellule dans laquelle la couche poreuse d'électrode à oxygène ou à air est en cérine substituée et en un matériau d'électrode à oxygène ou à air.

Le procédé de préparation d'une cellule électrochimique à métal support selon l'invention comprend une combinaison spécifique d'étapes spécifiques qui n'a jamais été décrite dans l'art antérieur.

Le procédé de préparation d'une cellule électrochimique selon l'invention répond aux besoins mentionnés plus haut et apporte une solution aux problèmes des procédés de préparation de cellules électrochimiques de l'art antérieur cités ci-dessus.

Le procédé selon l'invention se différencie notamment des procédés de l'art antérieur en ce qu'il comporte une seule étape thermique finale au cours de laquelle on réalise le frittage simultané du support en métal poreux cru et de toutes les couches crues déposées. Cette étape finale de frittage peut être appelée étape de « cofrittage ». Cette étape de frittage unique permet l'assemblage en une seule fois du support en métal poreux et de toutes les couches déposées.

Dans le procédé selon l'invention, on n'effectue pas le frittage du support poreux puis de chaque couche crue après le dépôt de chacune de ces couches.

Le nombre total d'étapes du procédé est ainsi considérablement réduit ce qui entraîne une diminution du coût et de la durée du procédé et le rend plus simple et plus fiable.

Le procédé selon l'invention assure le dépôt des couches sur le support métallique sans que le support ne soit détérioré et notamment sans que la microstructure de ce support ne soit modifiée.

De même, le procédé selon l'invention évite l'apparition de défauts tels que fissures et autres dans les couches et notamment dans la couche d'électrolyte.

Le procédé selon l'invention permet la préparation de cellules de tailles significatives et peut être facilement mis en oeuvre à grande échelle pour une production de masse.

D'autres effets et avantages de l'invention apparaîtront mieux à la lecture de la description détaillée qui va suivre, faite en référence aux dessins joints dans lesquels

### BRÈVE DESCRIPTION DES DESSINS.

- La figure 1 est une vue schématique en coupe verticale d'une cellule de « EHT » ou de « SOFC » à électrolyte support (« ESC ») ;
- la figure 2 est une vue schématique en coupe verticale d'une cellule de « EHT » ou de « SOFC » à électrode support (anode support : « ASC » en dénomination « SOFC » ou cathode support : « CSC » en dénomination « EHT ») ;
- la figure 3A est une vue schématique en coupe verticale d'une cellule de « EHT » ou de « SOFC » à métal support (« MSC ») dans une première configuration dans laquelle l'électrode qui est placée au contact du support métallique poreux est l'électrode à hydrogène ou à eau ;
- la figure 3B est une vue schématique en coupe verticale d'une cellule de « EHT » ou de « SOFC » à métal support (« MSC ») dans une seconde configuration dans laquelle l'électrode qui est placée au contact du support métallique poreux est l'électrode à oxygène ;
- la Figure 4 est une vue schématique en coupe verticale d'une cellule selon l'invention ;
- La Figure 5 est un graphique qui représente le comportement dilatométrique d'un support poreux en acier K41X.

En ordonnée est porté le déplacement (en %), et en abscisse est portée la Température (en °C). Cette figure montre que le coefficient de dilatation thermique du support poreux entre 300°C et 800°C est de 11.10⁻⁶/K.
- La Figure 6 est un graphique qui représente le comportement dilatométrique de la zircone DKKK de référence commerciale 10Sc1CeSZrO.

En ordonnée est porté le déplacement (en %), et en abscisse est portée la Température (en °C). Cette figure montre que le coefficient de dilatation thermique (CTE) de cette zircone entre 300°C et 1000°C est de 10.10⁻⁶/K.
- La Figure 7 est un graphique qui représente le protocole de frittage d'une cellule selon l'invention, conformément au procédé selon l'invention.

En ordonnée est portée la température (en °C) à gauche, et la pression partielle d'oxygène (en atm) à droite. En abscisse est porté le temps (heure). La courbe A (en trait plein) illustre l'évolution de la température en fonction du temps, et la courbe B (en traits pointillés) illustre l'évolution de la pression partielle d'oxygène en fonction du temps.

### EXPOSÉ DÉTAILLÉ DE MODES DE RÉALISATION PARTICULIERS.

La description détaillée qui suit est plutôt faite, par commodité, en référence à un procédé de préparation, de fabrication d'une cellule, de préférence de la cellule selon l'invention.

Précisons tout d'abord que le terme poreux tel qu'il est utilisé dans la présente en relation avec un matériau tel qu'un métal ou un alliage métallique, signifie que ce matériau contient des pores ou vides.

En conséquence, la densité de ce matériau poreux est inférieure à la densité théorique du matériau non poreux.

Au sens de l'invention, le support ou une couche est généralement considéré comme poreux lorsque sa densité est au plus d'environ 92% de sa densité théorique.

Les pores peuvent être reliés ou isolés mais dans le substrat métallique poreux ainsi que dans les autres couches poreuses de la cellule selon l'invention, la majorité des pores sont reliés, en communication. On parle alors de porosité ouverte.

Plus précisément, au sens de l'invention, un support ou une couche est généralement considérée comme poreuse, lorsque sa porosité est de 20 à 70%, de préférence de 20 à 60% en volume. Une couche telle que la couche d'électrolyte est généralement considérée comme dense lorsque sa porosité est inférieure à 6% en volume.

En outre, dans la présente, on emploie indifféremment les termes substrat et support, le terme support se rapportant plutôt au substrat poreux intégré ou allant être intégré dans une SOFC ou une EHT.

Enfin dans la présente, le terme « métal » recouvre aussi les alliages de métaux.

La fabrication d'une cellule électrochimique selon l'invention comprend une première étape au cours de laquelle on élabore le support en métal poreux « cru ».

Le substrat, support métallique poreux final, après frittage peut avoir, une section principale en forme de polygone, par exemple une section carrée ou rectangulaire ou bien une section circulaire.

Le substrat après frittage est généralement un substrat plan, planaire c'est-à-dire que les première et seconde surfaces mentionnées ci-dessus sont généralement planes, de préférence horizontales et parallèles et ont par exemple une des formes citées ci-dessus : polygone, rectangle, carré ou cercle, et que, en outre, l'épaisseur du substrat est faible par rapport aux dimensions desdites première et seconde surfaces. De préférence encore, lesdites première et seconde surfaces sont des surfaces horizontales et la première surface principale peut alors être qualifiée de surface inférieure tandis que la seconde surface principale peut alors être qualifiée de surface supérieure.

La distance entre la première surface principale et la deuxième surface principale du support en métal poreux, que l'on peut définir comme l'épaisseur du support en métal poreux peut être inférieure ou égale à 1 mm, de préférence elle peut être de 200 à 1000 µm, de préférence encore de 400 à 500 µm.

Le substrat après frittage peut notamment avoir la forme d'un disque, par exemple d'une épaisseur de 200 µm à 2 mm et d'un diamètre de 20 mm à 500 mm ou la forme d'un parallélépipède rectangle ou encore la forme d'un substrat à section carrée.

Le substrat après frittage peut être un substrat de grande taille, à savoir par exemple de 50 mm à 300 mm de diamètre ou de côté, ou un substrat de petite taille par exemple de 10 mm à 50 mm.

Les poudres métalliques introduites dans le moule peuvent être choisies parmi les poudres de métaux et d'alliages métalliques suivants : fer, alliages à base de fer, chrome, alliages à base de chrome, alliages fer-chrome, aciers inoxydables par exemple aciers inoxydables chromoformeurs comme l'acier inoxydable de référence K41X produit par ARCELOR MITTAL^{®}, nickel, alliages à base de nickel, alliages nickel chrome, alliages contenant du cobalt, alliages contenant du manganèse, alliages contenant de l'aluminium.

Les poudres utilisées dans le procédé selon l'invention peuvent être des poudres du commerce ou bien elles peuvent être préparées par broyage ou atomisation de morceaux massifs de métaux ou d'alliages.

Les poudres de métaux ou d'alliages utilisées dans le procédé selon l'invention ont généralement une granulométrie de 1 µm à 500 µm, de préférence de 1 µm à 100 µm.

Ce support métallique poreux cru peut être notamment fabriqué par pressage, notamment uniaxial, ou bien par coulage en bande.

Si le support métallique poreux après cofrittage comprend plusieurs couches pour donner un gradient de porosité, il est préparé à partir de plusieurs bandes par coulage en bande, ces bandes étant ensuite assemblées par thermopressage ou laminage.

Lors de la fabrication d'un support métallique poreux par pressage uniaxial, le métal ou alliage sous forme de poudre est éventuellement mélangé avec un agent porogène et un liant organique, le mélange est introduit dans un moule de forme adéquate, puis il est mis en forme par pressage uniaxial.

Le moule a une forme et une taille adaptées à la forme et à la taille du substrat que l'on souhaite préparer.

Le moule est généralement en un matériau métallique.

Un gradient de porosité peut être obtenu dans le support métallique poreux en faisant varier la quantité et/ou la distribution granulométrique du porogène et/ou du métal.

Afin d'obtenir un gradient de porosité du support métallique poreux selon l'invention, on peut déposer successivement dans le moule au moins deux couches de poudre, qui présentent des granulométries croissantes, respectivement décroissantes.

En effet, plus la granulométrie de la poudre est importante, plus la taille des pores du matériau pressé puis fritté issu de cette poudre sera élevée.

Ainsi, on pourra commencer par déposer dans le moule une première couche ou couche inférieure constituée par une poudre de forte granulométrie, à savoir par exemple avec une taille moyenne de 50 µm à 500 µm notamment de 200 µm, destinée à former dans le support métallique poreux final, et après compression/pressage puis cofrittage, une couche inférieure de forte porosité, à savoir d'une porosité généralement de 25% à 65%, avantageusement de 30% à 60%. Dans le support métallique poreux final, cette couche inférieure de forte porosité permet de faciliter l'acheminement des gaz à travers le poreux.

L'épaisseur de cette couche inférieure constituée par une poudre de forte granulométrie est telle qu'elle donne dans le poreux final après cofrittage une couche de forte porosité d'une épaisseur généralement de 100 µm à 2 mm.

Au-dessus de cette couche inférieure constituée par une poudre de forte granulométrie, on peut déposer une couche constituée par une poudre de faible granulométrie, à savoir par exemple avec une taille moyenne de 1 µm à 50 mm, notamment de 30 µm destinée à former dans le support métallique poreux final, et après compression et frittage, une couche supérieure de faible porosité, à savoir d'une porosité généralement de 10% à 40%, avantageusement de 20% à 30%. Dans le support métallique poreux final, cette couche supérieure de faible porosité permet de faciliter l'accrochage de la couche d'adaptation thermomécanique et la diffusion des gaz.

L'épaisseur de cette couche supérieure constituée par une poudre de faible granulométrie est telle qu'elle donne dans le poreux final une couche de faible porosité d'une épaisseur généralement inférieure à 200 µm, et de préférence inférieure à 100 µm.

Au lieu de déposer d'abord une couche inférieure constituée par une poudre de forte granulométrie puis une couche supérieure constituée par une poudre de faible granulométrie, on peut bien sûr, à l'inverse, commencer par déposer la couche constituée par une poudre de granulométrie faible puis déposer la couche constituée par une poudre de granulométrie élevée.

Une ou plusieurs couche(s) intermédiaire(s) constituée(s) par des poudres présentant une granulométrie intermédiaire entre la granulométrie de la poudre constituant la couche inférieure, respectivement supérieure de forte granulométrie, et la granulométrie de la poudre constituant la couche supérieure, respectivement inférieure de faible granulométrie peut (peuvent) être déposée(s) entre la couche inférieure et la couche supérieure.

Ces couches intermédiaires peuvent être au nombre de 1 à 8, par exemple de 1 à 5, notamment 2, 3 ou 4. La granulométrie des poudres qui constituent ces couches intermédiaires est avantageusement choisie pour assurer une évolution de la porosité plus continue dans le support métallique poreux final. En d'autres termes, ces couches intermédiaires sont constituées par des poudres dont la granulométrie décroît depuis la couche la plus proche de la couche constituée par une poudre de forte granulométrie jusqu'à la couche la plus proche de la couche constituée par une poudre de faible granulométrie.

Ainsi, on pourra prévoir 4 couches intermédiaires constituées par des poudres ayant respectivement une granulométrie de 300 à 400, 200 à 300, 100 à 200, 50 à 100 µm entre une couche de forte granulométrie ayant généralement une granulométrie de 400 à 500 µm et une couche de faible granulométrie ayant généralement une granulométrie de 1 à 50 µm.

La porosité et l'épaisseur exactes des couches dans le support métallique poreux final sont définies par la granulométrie des poudres ainsi que par la force appliquée lors de l'étape de pressage décrite plus bas.

En outre, toutes les couches de poudres y compris les couches intermédiaires éventuelles peuvent être constituées par un même alliage ou métal ou bien une ou plusieurs couches de poudres peuvent être constituées par un métal ou alliage différent des autres couches.

Une fois que les couches de poudres ont été disposées dans le moule, on procède ensuite à une étape de mise en forme de ces poudres par pressage, compression. Préalablement au remplissage du moule, il est éventuellement possible d'incorporer un liant, tel qu'un liant organique en solution de type alcool polyvinylique (PVA), et/ou un porogène de type poudre d'amidon. Ces composés peuvent être ajoutés à la poudre métallique sous la forme d'une suspension ou d'une poudre (les deux présentant une teneur de 1 à 20%, de préférence de 3% en poids). L'incorporation du liant permet d'obtenir une tenue mécanique suffisante des pièces pressées à cru. L'incorporation du porogène permet d'atteindre la porosité finale requise du matériau.

On dépose, en les versant tout simplement dans le moule, les différentes couches, et le pressage est généralement réalisé sur la ou les couches, il est aussi possible de réaliser le pressage couche par couche.

De préférence, ce pressage, cette compression, est réalisé(e) à l'aide d'une presse uniaxiale.

Lors du pressage, on applique généralement une pression comprise entre 10 et 500 MPa, de préférence de 200 MPa pour obtenir ainsi une porosité de 70% à 20%, et de préférence de 40% à 60% à cru.

A l'issue de l'étape de mise en forme par pressage, compression, on obtient un support métallique poreux « cru », « green » avec une porosité globale, moyenne de 70% à 20%, de préférence de 40% à 60%. On sépare alors le substrat, support métallique poreux « cru » du moule.

On peut aussi préparer le substrat, support métallique poreux « cru » « green » par coulage en bande de une ou plusieurs bandes, puis éventuellement assemblage de ces bandes par thermopressage, emboutissage ou laminage.

Le thermopressage permet sous l'action couplée de la température et de la pression de ramollir les liants et plastifiants contenus dans les bandes et d'assurer une soudure entre elles.

Le métal sous forme de poudre est mis en suspension dans un solvant organique, par exemple de l'éthanol 2-butanone ou Methyl Ethyl ketone (MEK) en l'angue anglaise ou un mélange azéotropique de éthanol 2-butanone (MEK) et d'éthanol, en ayant éventuellement recours à un dispersant adapté, tel que par exemple l'acide oléique. Des liants tels que le carbonate de polypropylène ou le polyvinyle butyral (PVB), et/ou des plastifiants tels que le carbonate de propylène ou le polyéthylène glycol (PEG) peuvent être introduits, ainsi éventuellement qu'un porogène tel qu'une cire, une poudre d'amidon, ou de polyéthylène.

La suspension est coulée sur un support adéquat tel qu'une feuille de Mylar^{®} siliconée, sous la forme d'une bande au moyen d'un sabot de coulage.

D'autres bandes comportant éventuellement des quantités et/ou des distributions granulométriques différentes de porogène et/ou de métal permettant ainsi d'obtenir un gradient de porosité après cofrittage peuvent être coulées sur la première bande.

Avant le dépôt des couches sur le support poreux en métal, on réalise généralement un séchage du support poreux en métal.

Conformément à l'invention, on dépose ensuite successivement à l'état cru, sur le support en métal poreux les différentes couches destinées à constituer la cellule.

Plusieurs procédés peuvent être envisagés pour déposer les différentes couches et réaliser l'assemblage multimatériaux.

Ainsi, on favorisera le coulage en bande généralement pour les épaisseurs des composants supérieures à 80 µm et la sérigraphie pour les plus faibles épaisseurs. Cependant, d'autres procédés comme le pressage/thermopressage, la pulvérisation ou l'enduction centrifuge peuvent être également employés.

Les formulations des encres ou suspensions destinées à l'élaboration des couches (y compris le support poreux en métal) comprennent généralement un solvant, une ou plusieurs poudres des matériaux constituant la couche, un plastifiant et/ou un liant et/ou un dispersant. Ces formulations peuvent en outre éventuellement présenter des ajouts de porogènes afin de conserver une porosité suffisante après le cofrittage.

Afin de permettre l'assemblage en une seule étape de co-frittage du support poreux cru et des couches crues, les coefficients de dilatation thermique des matériaux constituant le support et les couches dans la gamme de températures comprise entre l'ambiante et la température de consolidation thermique doivent avantageusement être proches les uns des autres, ainsi que leur température de début de densification. De plus, le support poreux et les différentes couches doivent généralement présenter un retrait similaire pendant le traitement thermique de cofrittage.

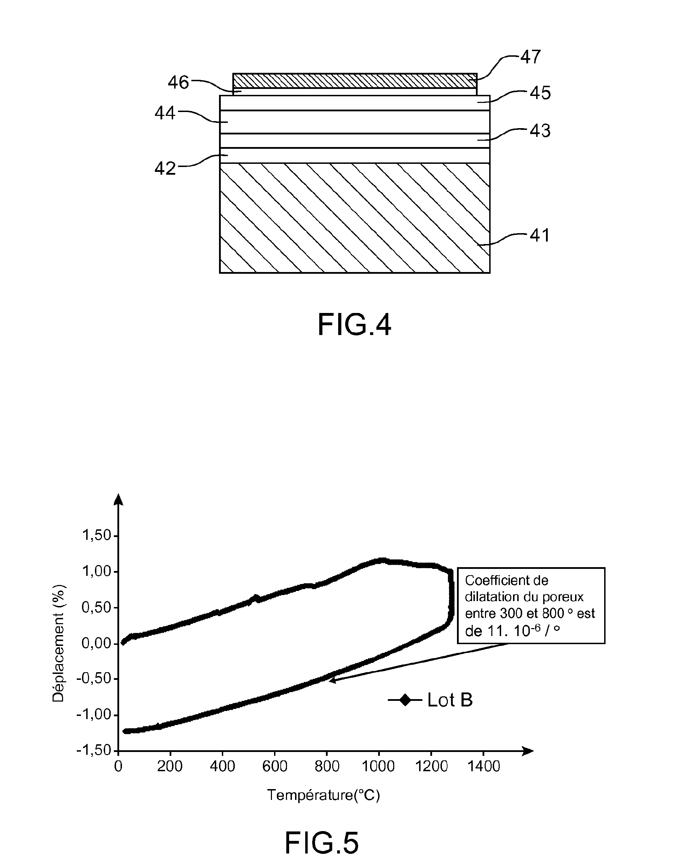

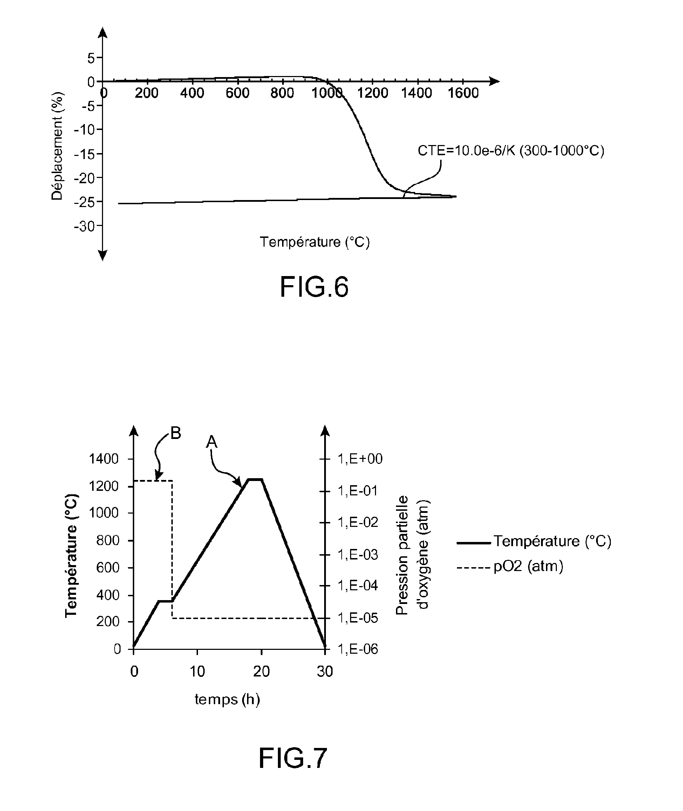

Les figures 5 et 6 montrent par exemple, un début de densification vers 1000°C du métal du support et de l'électrolyte.

Plus précisément, dans une deuxième étape on peut déposer à l'état cru sur la seconde surface principale du support en métal poreux cru, une couche poreuse d'adaptation thermomécanique.

Cette couche comprend généralement un métal, de préférence identique au métal du support en métal poreux et un conducteur ionique, tel que de la zircone stabilisée et/ou de la cérine substituée qui permet d'adapter le coefficient de dilatation thermique de cette couche à celui de l'électrolyte, tout en conservant une percolation de la phase métallique.

La zircone peut être de la zircone stabilisée, substituée par un oxyde choisi parmi les oxydes de Scandium, Aluminium, Yttrium, Ytterbium, Calcium et Cérium.

La cérine substituée, stabilisée est définie plus bas.

Cette couche crue peut être préparée par l'une quelconque des techniques déjà citées plus haut. De préférence, cette couche est préparée par sérigraphie d'une encre céramique comprenant une poudre de zircone stabilisée, une poudre du métal, un solvant tel que le terpinéol et éventuellement un plastifiant tel que l'éthylcellulose.

La concentration de la zircone stabilisée et/ou de la cérine substituée est généralement de 10 à 90% en poids, par exemple de 25% en poids du poids de l'encre et la concentration en métal est généralement de 10 à 90% en poids, par exemple 20% en poids du poids total de l'encre, la concentration en plastifiant est généralement de 1 à 10% en poids, par exemple de 5% en poids et la concentration en solvant et généralement de 30 à 80% en poids, par exemple de 50% en poids.

La couche ou bande déposée est séchée généralement à une température de 30 à 120 °C, par exemple de 50°C, généralement pendant 1 à 24 heures, par exemple pendant 5 heures.

Cette couche après le cofrittage présente généralement une épaisseur de 5 µm à 40 µm, par exemple de 20 µm.

Dans une troisième étape, on dépose éventuellement sur la couche poreuse d'adaptation thermomécanique crue, une couche poreuse crue, barrière à la diffusion du chrome.

La présence de cette couche est préférable, voire nécessaire, notamment dans le cas où le métal ou alliage du support en métal ou alliage poreux est susceptible de former du chrome lors du fonctionnement de la cellule. On parle ainsi de métal ou alliage chromoformeur. Parmi ces alliages chromoformeurs, on peut citer notamment les aciers inoxydables au chrome.

Cette couche permet de piéger le chrome généré par oxydation et évaporation du métal ou de l'alliage métallique du support lors du fonctionnement de la cellule. Ce chrome diffuse en effet vers l'anode et détériore ses propriétés avec le temps.

Cette couche comprend généralement de la zircone stabilisée identique à celle utilisée dans la couche d'adaptation thermomécanique, et/ou de la cérine substituée, et un oxyde mixte de métaux de structure spinelle.

Les métaux de ce composé de structure spinelle peuvent être choisis parmi Mn, Co, Ni et Fe. Un exemple d'un tel composé de structure spinelle est le (MnₓCo₃₋ₓ)O₄.

Le réseau de composés à structure spinelle est percolant pour assurer la continuité électrique. Ces structures réagissent avec le Cr et le stabilise sous la forme d'une nouvelle structure spinelle présentant une volatilité du Cr inférieure à celle de l'oxyde formé à la surface du métal tout en possédant une bonne conductivité électrique.

L'épaisseur de cette couche après cofrittage est généralement de 5 à 20 µm.

Cette couche de barrière de diffusion du chrome crue peut être préparée par l'une quelconque des techniques déjà citées plus haut. De préférence, cette couche est préparée par sérigraphie d'une encre céramique comprenant une poudre de zircone stabilisée analogue à celle utilisée pour la préparation de la couche d'adaptation thermomécanique crue, une poudre d'oxyde mixte de métaux de structure spinelle, un solvant tel que le terpinéol et éventuellement un plastifiant tel que l'éthylcellulose.

La concentration de la zircone stabilisée et/ou de la cérine substituée est généralement de 10 à 90% en poids, par exemple de 20% en poids du poids de l'encre et la concentration en oxyde mixte de métaux de structure spinelle est généralement de 10 à 90% en poids, par exemple 20% en poids du poids total de l'encre, la concentration en plastifiant est généralement de 1 à 10% en poids, par exemple de 5% en poids et la concentration en solvant et généralement de 30 à 80% en poids, par exemple de 60% en poids.

La couche ou bande déposée est séchée généralement dans les mêmes conditions que la couche d'adaptation thermomécanique.

Dans une quatrième étape, on dépose une couche poreuse d'électrode à hydrogène sur ladite couche poreuse barrière à la diffusion du chrome.

Cette couche comprend généralement un mélange de zircone stabilisée, substituée analogue à celle déjà décrite plus haut, et/ou de cérine substituée ; et de NiO.

La zircone stabilisée et/ou la cérine substituée, représente généralement de 20 à 80% en poids de la couche après cofrittage et le NiO représente généralement de 20 à 80% en poids de la couche après cofrittage.

L'épaisseur de cette couche après cofrittage est généralement de 10 à 120 µm, de préférence de 40 à 120 µm.

Cette couche d'électrode à hydrogène (ou à eau) crue peut être préparée par l'une quelconque des techniques déjà citées plus haut. De préférence, cette couche est préparée par sérigraphie d'une encre céramique comprenant une poudre de zircone stabilisée analogue à celle utilisée pour la préparation de la couche d'adaptation thermomécanique crue, une poudre de NiO, un solvant tel que le terpinéol et éventuellement un plastifiant tel que l'éthylcellulose.

Pour un mode de fonctionnement SOFC, sous gaz naturel, l'addition de cérine à la zircone permet d'améliorer la durabilité de la cellule, notamment vis-à-vis des composés sulfurés contenus dans le gaz naturel et du dépôt de carbone par cokage.

La concentration de la zircone stabilisée et/ou de la cérine substituée est généralement de 20 à 80% en poids, par exemple de 30% en poids du poids de l'encre et la concentration de NiO est généralement de 20 à 80 en poids, par exemple 30% en poids du poids total de l'encre, la concentration en plastifiant est généralement de 1 à 10% en poids, par exemple de 5% en poids et la concentration en solvant et généralement de 30 à 80 en poids, par exemple de 35% en poids.

La couche ou bande déposée est séchée généralement dans les mêmes conditions que la couche d'adaptation thermomécanique et la couche de barrière au chrome par exemple pendant 5 heures à 50°C.

Dans une cinquième étape, on dépose sur la couche d'électrode à hydrogène crue une couche d'électrolyte.

La couche d'électrolyte, après cofrittage, est une couche dense.

Cette couche comprend généralement de la zircone stabilisée identique à celle définie plus haut.

L'épaisseur de cette couche après cofrittage est généralement de 5 à 50 µm, par exemple de 10 µm.

Cette couche d'électrolyte crue peut être préparée par l'une quelconque des techniques déjà citées plus haut. De préférence, cette couche est préparée par sérigraphie d'une encre céramique comprenant une poudre de zircone stabilisée analogue à celle utilisée pour la préparation de la couche d'adaptation thermomécanique crue, un solvant tel que le terpinéol et éventuellement un plastifiant tel que l'éthylcellulose.

La concentration de la zircone stabilisée est généralement de 10 à 90% en poids, par exemple de 60% en poids du poids de l'encre, la concentration en plastifiant est généralement de 1 à 10% en poids, par exemple de 5% en poids et la concentration en solvant et généralement de 10 à 90% en poids, par exemple de 60% en poids.

La couche déposée est séchée généralement à une température de 20 à 160 °C, par exemple de 50°C, généralement pendant 5 minutes à 24 heures, par exemple pendant 5 heures.

Dans une sixième étape, on dépose sur la couche d'électrolyte dense une couche de barrière de réaction dense ou poreuse crue. Cette couche après cofrittage permet d'éviter l'apparition de phases parasites résistives telles que des pyrochlores provenant de la réaction entre la zircone stabilisée et le matériau d'électrode à air.

Cette couche comprend généralement de la cérine stabilisée, substituée, par exemple à l'oxyde yttrium (« YDC ») ou de gadolinium (« GDC »).

L'épaisseur de cette couche après cofrittage est généralement de 1 à 5 µm, par exemple de 2 µm.

Cette couche de barrière de réaction crue peut être préparée par l'une quelconque des techniques déjà citées plus haut. De préférence, cette couche est préparée par sérigraphie d'une encre céramique comprenant une poudre de cérine stabilisée, un solvant tel que le terpinéol et éventuellement un plastifiant tel que l'éthylcellulose.

La concentration de la cérine stabilisée est généralement de 10 à 90% en poids, par exemple de 40% en poids du poids de l'encre, la concentration en plastifiant est généralement de 1 à 10% en poids, par exemple de 5% en poids et la concentration en solvant et généralement de 10 à 90% en poids, par exemple de 60% en poids.

La couche déposée est séchée généralement à une température de 20 à 160 °C, par exemple de 50°C, généralement pendant 5 minutes à 24 heures, par exemple pendant 5 heures.

Dans une septième étape, on dépose sur la couche de barrière de réaction dense ou poreuse crue une couche d'électrode oxygène ou à air crue.

Cette couche d'électrode à air comprend généralement un mélange de cérine dopée, substituée, par exemple à l'oxyde de gadolinium (« GDC ») et d'un matériau d'électrode à air.

Le matériau d'électrode à oxygène ou à air peut être choisi parmi LSC, LSCF, un oxyde mixte de structure pérovskite de formule Pr_{0.6}Sr_{0.4}Co_{0.3}Fe_{0.2}O₃ (PSCF), SmSrCoO₃, Pr₂NiO₄, Nd₂NiO₄, La₂NiO₄, LSM, etc.

Cette couche a généralement une épaisseur, après cofrittage, de 10 à 80 µm, de préférence de 20 à 80 µm, par exemple de 25 µm.

Cette couche présente généralement un gradient de composition. En effet, un tel gradient est généralement nécessaire et préférable en raison de l'écart qui peut exister entre le coefficient de dilatation thermique de l'électrolyte et celui du matériau de l'électrode à oxygène ou à air. Le coefficient de dilatation thermique du matériau de l'électrode à oxygène ou à air est généralement plus important que celui de l'électrolyte et que celui de la couche barrière de réaction. A titre d'exemple, ce coefficient est de 19.10⁻⁶ K⁻¹ pour PCSF contre 11.10⁻⁶ K⁻¹ pour la zircone et 12.10⁻⁶ K⁻¹ pour YDC.

Par gradient, on entend généralement que la concentration en cérine, dopée, substituée par exemple à l'oxyde de gadolinium diminue dans la couche d'électrode à oxygène ou à air depuis la face de cette couche, ou face inférieure, déposée sur la couche barrière de réaction jusqu'à son autre face ou face supérieure.

Ce gradient peut être obtenu en déposant successivement sur la couche barrière de réaction plusieurs couches de même épaisseur ou d'épaisseurs différentes, par exemple de 2 à 5 couches, la concentration en cérine, dopée, substituée par exemple à l'oxyde de gadolinium allant en diminuant depuis la première couche déposée sur la couche barrière de réaction jusqu'à la dernière couche ou couche supérieure.

On pourra ainsi déposer trois couches successives sur la couche de barrière de réaction avec respectivement des concentrations en cérine de 75% en poids, 50% en poids et 25% en poids.

Cette couche d'électrode à oxygène ou à air crue peut être préparée par l'une quelconque des techniques déjà citées plus haut. De préférence, cette couche est préparée par sérigraphie d'une encre céramique comprenant une poudre de cérine stabilisée analogue à celle utilisée pour la préparation de la couche d'adaptation thermomécanique crue et une poudre de matériau d'électrode à oxygène ou à air.

Si plusieurs couches successives sont déposées pour ainsi préparer une couche d'électrode à oxygène ou à air à gradient, les encres ou suspensions utilisées pour préparer ces couches successives ont généralement des concentrations décroissantes en cérine substituée.

La couche déposée est séchée généralement à une température de 20 à 160 °C, par exemple de 50°C, généralement pendant 5 minutes à 24 heures, par exemple pendant 5 heures.

A l'issue de ces étapes de dépôt de couches crues sur le support en métal poreux cru, on obtient un multicouche cru qui peut éventuellement être découpé à la forme désiré.

Conformément au procédé selon l'invention, on procède ensuite au frittage en une seule fois, en une seule étape, de l'ensemble formé par le support en métal poreux cru, et les couches crues déposées sur ce support. Du fait que ce frittage concerne simultanément le support et toutes les couches crues déposées sur celui-ci, il est appelé « cofrittage ».

Le cofrittage s'effectue préférentiellement sous une atmosphère contrôlée, à savoir une atmosphère très faiblement oxydante, généralement définie par une pression partielle d'oxygène très faible, par exemple inférieure à 10⁻⁵ atm, de préférence inférieure à 10⁻²⁰ atm, afin de limiter l'oxydation de ce poreux. Cette atmosphère est généralement constituée par un gaz inerte de l'argon ou de l'azote en présence d'un réducteur tel que l'hydrogène, ou bien par de l'hydrogène pur.

Le cofrittage est généralement réalisé à une température comprise entre la température minimum de début de frittage et la température de densification totale du matériau constituant le support poreux « cru ». Cette température est généralement comprise entre 600°C et 1600°C et elle est plus précisément de 800°C à 1400°C, notamment pour l'acier K41X.

La température de frittage peut être maintenue (palier de frittage) pendant une durée de 0 à 8 heures, par exemple de 3 heures.

Le choix de la température de densification-frittage ainsi que la durée du palier de frittage est conditionné par la porosité finale moyenne, globale, souhaitée du matériau support et des couches poreuses et de préférence on choisira une température de frittage de 1200°C que l'on maintiendra pendant une durée de 3 heures.

Le cycle thermique de cofrittage, peut comprendre deux étapes successives, distinctes :
- une première étape, ou étape de déliantage, peut être réalisée sous air par exemple de la température ambiante jusqu'à une température de 350°C à 450°C, qui est une température pour laquelle le support métallique ne présente pas d'oxydation significative.

On pourra effectuer par exemple une montée en température depuis la température ambiante jusqu'à une température comprise entre 350°C et 450°C à raison de 0,5°C/min, puis observer un palier à cette température entre 350°C et 450°C pendant une durée de 1 à 12 heures (voir figure 7).
- une deuxième étape qui est l'étape de frittage proprement dite, est réalisée par exemple jusqu'à 1200°C sous une atmosphère contrôlée, très faiblement oxydante telle que définie plus haut, qui permet de ne pas réduire les phases cristallines de l'électrode à air et de la couche barrière de diffusion du Cr éventuelle, et de ne pas oxyder significativement le métal du support.

On pourra effectuer par exemple une montée en température depuis la température du palier de déliantage, entre 350°C et 450°C à raison de 2°C/min, jusqu'à 1200°C, puis observer un palier à cette température pendant une durée de 3 à 10 heures (voir figure 7).

On effectue ensuite une descente en température depuis 1200°C jusqu'à la température ambiante, à raison de 0,1 à 5°C/min (voir figure 7).

Une cellule, notamment une cellule selon l'invention, obtenue par le procédé selon l'invention est représentée sur la figure 4.

Il s'agit d'une cellule de type SOFC. La cellule de type électrolyseur par exemple de vapeur d'eau est conçue avec un empilement de couches similaire et élaborée selon un protocole identique.

A cet égard, on peut noter que la présente description s'applique à toute cellule qu'il s'agisse d'une "SOFC" ou d'une "EHT". Les adaptations nécessaires à chaque type de cellule et à leur procédé de fabrication peuvent être facilement réalisées par l'homme du métier.

Elle comprend un support métallique poreux (41), une couche d'adaptation thermomécanique (42), une couche barrière de diffusion du chrome (optionnelle) (43), une électrode à hydrogène ou à eau (44), un électrolyte dense (45), une couche barrière de réaction (46) et une électrode à oxygène ou air (47).

La « SOFC » comprenant une cellule selon l'invention trouve en particulier son application dans le domaine de la micro-cogénération. On pourra par exemple utiliser cette architecture de cellule dans une pile alimentée par du gaz naturel de ville et intégrée dans une chaudière individuelle pour une production simultanée d'électricité et de chaleur.

Une « SOFC » comprenant une cellule selon l'invention peut également fonctionner en étant alimentée par du biogaz, issu par exemple du traitement des déchets de décharge ou de stations d'épuration, ou par du gaz issu du traitement d'effluents divers, par exemples des effluents papetiers ou laitiers.

L'invention va maintenant être décrite en référence à l'exemple suivant, donné à titre illustratif et non limitatif.

Dans cet exemple, on prépare une cellule électrochimique à métal support, notamment une cellule selon l'invention représentée sur la figure 4, par le procédé selon l'invention.

### 1/ Support métallique

Le support métallique est réalisé par coulage en bande à partir d'un acier ferritique inoxydable de référence K41X (désignation européenne X2CrTiNb18 1.4509) produit par ARCELOR MITTAL^{®}.

Une première suspension est préparée avec une poudre d'acier grossière dont la taille médiane est centrée sur 200 µm.

La suspension de coulage est ensuite préparée selon la recette suivante : 82% en poids de métal, 13% en poids de 2-butanone (solvant), 3,5% en poids de carbonate de polypropylène (liant) et 0,5% en poids de propylène carbonate (plastifiant). Cette suspension est coulée sur une feuille de Mylar^{®} siliconée à l'aide d'un sabot présentant une hauteur de coulage de 700 µm. Après séchage à la température ambiante pendant 5 heures, une seconde bande est coulée sur la première à l'aide d'une seconde suspension présentant la même formulation que la précédente mais réalisée à partir d'une poudre d'acier plus fine dont la taille médiane est centrée sur 30 µm.

### 2/ Couche d'adaptation thermomécanique.

Une couche de fine épaisseur (20 µm) est déposée par sérigraphie d'une encre céramique sur la bande crue précédente.

Cette encre est réalisée selon la recette suivante : 25% en poids de zircone stabilisée au scandium et au cérium (10Sc1CeSZrO) produit par DAIICHI KIGENSO KAGAKU KOGYO dont la taille des particules est centrée sur 0,5 µm, 20% en poids de poudre d'acier centrée sur 10 µm, 5% en poids d'éthyle cellulose (plastifiant) et 50% en poids de terpinéol (solvant). La bande est ensuite séchée à 40°C pendant 5 heures.

### 3/ Couche optionnelle de barrière anti-diffusion du Cr

Dans le cas notamment où la nature du métal utilisé pour réaliser le support est un chromito-formeur, une couche est ajoutée pour stopper la diffusion du Cr vers l'électrode à H₂.

Cette couche d'une épaisseur de 15 µm est déposée par sérigraphie sur la bande crue obtenue précédemment à partir d'une encre céramique. Cette encre est élaborée à partir de la recette suivante : 20% en poids de zircone stabilisée identique à celle utilisée dans la couche d'adaptation thermomécanique, 20% en poids d'oxyde mixte de type spinelle (MnₓCo₃₋ₓ)O₄ capable de fixer le Cr produit par la société MARION TECHNOLOGY^{®} présentant une taille de particules centrée sur 1 µm, 5% d'éthyl cellulose et 55% de terpinéol. L'étape de séchage est identique à l'étape précédente.

### 4/ Electrode à H₂

L'électrode à H₂ d'une épaisseur de 40 µm est réalisée par sérigraphie sur la bande crue issue de l'étape précédente à partir d'une encre composée de 30% en poids de zircone stabilisée identique à celle utilisée précédemment, de 30% de poids de NiO produit par Pharmacie Centrale de France dont la taille des particules est centrée sur 5 µm, de 5% d'éthyl cellulose et de 35% de terpinéol. Le séchage est réalisé pendant 5 heures à 40°C.

### 5/ Electrolyte

L'électrolyte mince de 10 µm est réalisé par sérigraphie sur la bande crue précédente. L'encre déposée est composée de 60% en poids de zircone stabilisée identique à celle l'étape 2, de 5% en poids d'éthyl cellulose et de 55% en poids de terpinéol.

### 6/ Couche barrière de réaction

Afin d'éviter toute réactivité entre la zircone de l'électrolyte et le matériau d'électrode à air, une couche à base de cérine substituée à l'oxyde d'yttrium (YDC) de 2 µm est déposée par sérigraphie sur la bande crue issue de l'étape précédente.

La formulation de l'encre est 60% en poids de cérine (YDC) produit par la société MARION TECHNOLOGY^{®} dont la taille des particules est centrée sur 0,5 µm, 5% en poids d'éthyl cellulose et de 55% en poids de terpinéol. Le séchage est effectué dans les mêmes conditions que l'étape précédente.

### 7/ Electrode à oxygène ou à air

L'électrode à oxygène ou à air est composée d'un oxyde mixte de structure pérovskite de formule Pr_{0.6}Sr_{0.4}Co_{0.8}Fe_{0.2}O₃ (PSCF) associé avec de la cérine substituée à l'oxyde de gadolinium (« GDC »). En raison d'un coefficient de dilatation plus important que celui de l'électrolyte et de la couche barrière de réaction, (19.10⁻⁶ K⁻¹ pour PSCF contre 11.10⁻⁶ K⁻¹ pour la zircone et 12.10⁻⁶ K⁻¹ pour « YDC ») l'électrode à oxygène ou à air est préparée avec une architecture qui présente un gradient de composition.

Cette électrode comprend donc une couche de 5 µm d'un mélange à 75% en poids de CGO et 25% en poids de PSCF, une couche de 10 µm d'un mélange à 50% en poids de CGO et à 50% en poids de PSCF, et une couche de 10 µm d'un mélange à 25% en poids de CGO et à 75% en poids de PSCF. L'ensemble des couches est déposé par sérigraphie sur la bande crue issue de l'étape précédente. Le séchage des différentes couches est réalisé pendant 5 heures à 40°C.

A l'issue de cette mise en forme, le multicouche est découpé selon la forme désirée puis fritté dans les conditions exposées par la figure 7 qui montre le protocole de frittage de la cellule.

Le cycle de frittage se décompose en 2 phases distinctes, la première phase, réservée au déliantage, est réalisée sous air jusqu'à 350°C et la seconde qui concerne le frittage de la cellule réalisée sous argon contenant 10⁻⁵ atm d'oxygène.

### REFERENCES

[1] S.J. Visco, Craig P. Jacobson, L.C. De Jonghe, LBNL Activity Overview, Presented at the SECA Workshop, February 20th, 2003.
[2] G.Schiller, A.Ansar, M.Lang, O.Patz, "High temperature water electrolysis using metal supported solid oxide electrolyser cells (SOEC), J.Appl Electrochem (2009) 39:293-301
[3] G. Schiller, et al., "Development of plasma sprayed components for a new SOFC design", SOFC V, Electrochemical proceedings Vol 97-18 (1997), 635-644
[4] G. Schiller , R.Henne, M.Lang, S.Schaper, "Development of metallic substrate supported thin film sofc by applying vacuum spray techniques", Electrochemical Proceedings Vol 99-19,1999.
[5] P. Szabo, et al., "Measurements of high temperature leak rates on vacuum-plasma sprayed SOFC electrolytes", 7th European SOFC forum, Luzern 3-7 July 2006 (2006), P0419.
[6] T. Franco, M. Lang, G. Schiller, P. Szabo, W. Glatz, G. Kunschert, "Power metallurgy high performance materials for substrate-supported IT-SOFCs", Proc. 6th European SOFC forum, Luzern (2004), 209-216.
[7] R. Vassen et al., "Gas-tight zirconia electrolyte layers for SOFCs by atmospheric plasma spraying", SOFC IX, Electrochemical Society Proceedings, Vol 2005-07 (2005), 1016-1024.
[8] R. Vassen et al., "Gas-tight zirconia electrolyte layers for SOFCs by atmospheric plasma spraying", SOFC IX, Electrochemical Society Proceedings, Vol 2005-07 (2005), 1016-1024.
[9] R. Vassen et al., "Development of gas-tight zirconia electrolyte layers using atmospheric plasma spraying", 207th ECS Meeting - Quebec City, Canada, May 2005.
[10] S.R.Hui and al., Journal of Power Sources 167 (2007) 336-339.
[11] Q.Huang and al., Journal of Power Sources 177 (2008) 339-347.
[12] Z.Wang and al., Journal of Power Sources 176 (2008) 90-95.
[13] D. Hathiramani et al., "Degradation mechanism of metal supported atmospheric plasma sprayed solid oxide fuel cells", 30th Int. Conf. Adv. Ceram. Composites (2006).
[14] I. Villareal et al., "Metal supported solid oxide fuel cells", Electrochem. Sol. State Letters, Vol 6, Iss. 9 (2003) A178-179.
[15] Y.B.Matus, L.C.De Jonghe, C.P.Jacobson, S.J.Visco, Solid State Ionics 176 (2005) 443-449.
[16] C.P.Jacobson, S.J.Visco, L.C.De Jonghe, US-B2-6,921,557 B2.
[17] S.J.Visco, C.P.Jacobson, L.C.De Jonghe, US-B2-7,118,777 B2.
[18] L.C.De Jonghe, C.P.Jacobson, S.J.Visco, US-B2-7,351,488 B2.
[19] M.C.Tucker, G.Y.Lau, C.P.Jacobson, L.C.De Jonghe, S.J.Visco, Journal of Power Sources 171 (2007) 477-482
[20] M.C.Tucker, G.Y.Lau, C.P.Jacobson, L.C.De Jonghe, S.J.Visco, Journal of Power Sources 175 (2008) 447-451
[21] J.D.Carter, D.Myers, R.Kumar, "Recent progress on the development of Tuffcell, a metal supported SOFC/SOEC", The 30th International conference & Exposition on advances ceramics and composites, 2006.
[22] Ceres Power LTD, GB-A-2 400 486, "Densification of ceria based electrolytes".
[23] Ceres Power LTD, US-B2 6,794,075 B2.
[24] Ceres Power LTD, WO-A2-03/075382.
[25] P. Attryde et al., "Stacks and systems based around metal supported SOFCs operating at 500-600°C" SOFC IX, Electrochemical Society Proceedings, Vol 2005-07 (2005), 113-122.
[26] N.Christiansen, J.Norsk, EP-A-1353394.

## Revendications

1. Cellule électrochimique à métal support comprenant :
- un support en métal poreux (41) comportant une première surface principale et une seconde surface principale ;
- une couche poreuse d'adaptation thermomécanique (42) sur ladite seconde surface principale ;
- une couche poreuse, barrière à la diffusion du chrome (43), sur ladite couche poreuse d'adaptation thermomécanique, cette couche poreuse, barrière à la diffusion du chrome, étant en zircone stabilisée et/ou en cérine substituée, et en un oxyde mixte de structure spinelle ;
- une couche poreuse d'électrode à hydrogène (44) sur ladite couche poreuse barrière à la diffusion du chrome ;
- une couche dense d'électrolyte (45) sur ladite couche poreuse d'électrode à hydrogène ;
- une couche barrière de réaction, dense ou poreuse (46), sur ladite couche dense d'électrolyte (45) ;
- une couche poreuse d'électrode à oxygène ou à air (47) sur ladite couche barrière de réaction (46).

2. Cellule électrochimique à métal support selon la revendication 1, dans laquelle la première surface principale et la seconde surface principale sont des surfaces planes et parallèles.

3. Cellule électrochimique à métal support selon la revendication 2, dans laquelle la première surface principale est une surface inférieure et la seconde surface principale est une surface supérieure, et les couches sont successivement empilées sur la seconde surface principale.

4. Cellule électrochimique à métal support selon l'une quelconque des revendications précédentes, dans laquelle la porosité du support en métal poreux et des couches poreuses est de 20 à 70%, de préférence de 20 à 60% en volume, et la porosité de la ou des couche(s) dense(s) est inférieure à 6% en volume.

5. Cellule selon l'une quelconque des revendications précédentes dans laquelle la distance entre la première surface principale et la deuxième surface principale du support en métal poreux est inférieure ou égale à 1 mm, de préférence elle est de 200 à 1000 µm, de préférence encore de 400 à 500 µm.

6. Cellule selon l'une quelconque des revendications précédentes, dans laquelle le support en métal poreux est en un métal choisi parmi le fer, les alliages à base de fer, le chrome, les alliages à base de chrome, les alliages fer-chrome, les aciers inoxydables par exemple les aciers inoxydables chromoformeurs, le nickel, les alliages à base de nickel, les alliages nickel chrome, les alliages contenant du cobalt, les alliages contenant du manganèse, les alliages contenant de l'aluminium.

7. Cellule selon l'une quelconque des revendications précédentes, dans laquelle la couche poreuse d'adaptation thermomécanique est en un métal, de préférence identique au métal du support en métal poreux, et en un conducteur ionique tel que la zircone stabilisée et/ou la cérine substituée.

8. Cellule selon l'une quelconque des revendications précédentes, dans laquelle la couche poreuse d'électrode à hydrogène est en un mélange de NiO, et de zircone stabilisée et/ou de cérine substituée.

9. Cellule selon l'une quelconque des revendications précédentes, dans laquelle la couche dense d'électrolyte est en zircone stabilisée.

10. Cellule selon l'une quelconque des revendications précédentes, dans laquelle la couche barrière de réaction est en cérine substituée.

11. Cellule selon l'une quelconque des revendications précédentes, dans laquelle la couche poreuse d'électrode à oxygène ou à air est en cérine substituée et en un matériau d'électrode à oxygène ou à air.

12. Procédé de préparation d'une cellule électrochimique à métal support comprenant :
- un support en métal poreux (41) comportant une première surface principale et une seconde surface principale ;
- une couche poreuse d'adaptation thermomécanique (42) sur ladite seconde surface principale ;
- éventuellement, une couche poreuse, barrière à la diffusion du chrome (43), sur ladite couche poreuse d'adaptation thermomécanique ;
- une couche poreuse d'électrode à hydrogène (44) sur ladite couche poreuse barrière à la diffusion du chrome ;
- une couche dense d'électrolyte (45) sur ladite couche poreuse d'électrode à hydrogène ;
- une couche barrière de réaction dense ou poreuse (46), sur ladite couche dense d'électrolyte (45) ;
- une couche poreuse d'électrode à oxygène ou à air (47) sur ladite couche barrière de réaction (46) ;
procédé dans lequel :
a) on prépare un support en métal poreux cru ; puis
b) on dépose successivement à l'état cru sur la seconde surface principale du support en métal poreux cru :
- une couche poreuse d'adaptation thermomécanique ;
- éventuellement, une couche poreuse, barrière à la diffusion du chrome ;
- une couche poreuse d'électrode à hydrogène ;
- une couche dense d'électrolyte ;
- une couche barrière de réaction dense ou poreuse ; et
- une couche poreuse d'électrode à oxygène ou à air ;
c) on procède au frittage simultané, en une seule fois, du support en métal poreux cru et de toutes les couches à l'état cru déposées.

13. Procédé selon la revendication 12, dans lequel les couches sont déposées par un procédé choisi parmi la sérigraphie, le coulage en bande, le pressage, le thermopressage, la pulvérisation et l'enduction centrifuge.

14. Procédé selon la revendication 12 ou 13, dans lequel l'étape de frittage c) est réalisée sous une atmosphère contrôlée, par exemple une atmosphère très faiblement oxydante.

15. Procédé selon l'une quelconque des revendications 12 à 14, dans lequel l'étape de frittage c) est réalisée à une température de 600°C à 1600°C, de préférence de 800°C à 1400°C.

16. Procédé selon l'une quelconque des revendications 12 à 15, dans lequel l'étape de frittage c) comprend une étape de déliantage sous air puis une étape de frittage proprement dit sous une atmosphère contrôlée, par exemple une atmosphère très faiblement oxydante.

## Patentansprüche

1. Elektrochemische Zelle mit einem Metallsubstrat, umfassend :
- ein poröses Metallsubstrat (41) mit einer ersten Hauptfläche und einer zweiten Hauptfläche ;
- eine poröse thermomechanische Adaptionsschicht (42) auf der genannten zweiten Hauptfläche ;
- eine poröse, eine Chrom-Diffusionsbarrierenschicht (43) auf der genannten porösen thermomechanischen Adaptationsschicht, wobei diese poröse, eine Chrom-Diffusionsbarriere bildende Schicht aus stabilisiertem Zirkon und/oder aus substituiertem Zeroxid, und aus einem Mischoxid mit Spinellstruktur ist;
- eine poröse Wasserstoffelektrodenschicht (44) auf der genannten porösen Chrom-Diffusionsbarrierenschicht ;
- eine dichte Elektrolyt-Schicht (45) auf der genannten porösen Wasserstoffelektrodenschicht ;
- eine Reaktionsbarrierenschicht (46), dicht oder porös, auf der genannten dichten Elektrolyt-Schicht (45) ;
- eine poröse Sauerstoff- oder Luftelektrodenschicht (47) auf der genannten Reaktionsbarrierenschicht (46).

2. Elektrochemische Zelle mit einem Metallsubstrat nach Anspruch 1, bei der die erste Hauptfläche und die zweite Hauptfläche plane und parallele Flächen sind.

3. Elektrochemische Zelle mit Metallsubstrat nach Anspruch 2, bei der die erste Hauptfläche eine untere Fläche ist und die zweite Hauptfläche eine obere Fläche ist, und die Schichten sukzessive auf der zweiten Hauptfläche gestapelt sind.

4. Elektrochemische Zelle mit Metallsubstrat nach einem der vorhergehenden Ansprüche, bei der die Porosität des porösen Metallsubstrats und der porösen Schichten 20 bis 70 und vorzugsweise 20 bis 60 Vol.-% beträgt, und die Porosität der dichten Schicht(en) unter 6 Vol.-% liegt.

5. Zelle nach einem der vorhergehenden Ansprüche, bei der der Abstand zwischen der ersten Hauptfläche und der zweiten Hauptfläche des porösen Metallsubstrats kleiner oder gleich 1 mm, besser 200 bis 1000 µm und noch besser 400 bis 500 µm beträgt.

6. Zelle nach einem der vorhergehenden Ansprüche, bei der das Metall des porösen Metallsubstrats ausgewählt wird unter dem Eisen, den Legierungen auf Eisenbasis, dem Chrom, den Legierungen auf Chrombasis, den Eisen-Chrom-Legierungen, den nichtrostenden Stählen, zum Beispiel den chrombildenden bzw. chromabscheidenden nichtrostenden Stählen, dem Nickel, den Legierungen auf Nickelbasis, den Nickel-Chrom-Legierungen, den Kobalt enthaltenden Legierungen, den Mangan enthaltenden Legierungen, den Aluminium enthaltenden Legierungen.

7. Zelle nach einem der vorhergehenden Ansprüche, bei der die poröse thermomechanische Adaptionsschicht aus einem Metall, vorzugsweise identisch mit dem Metall des porösen Metallsubstrats, und aus einem lonenleiter wie etwa stabilisiertem Zirkon und/oder substituiertem Zeroxid ist.

8. Zelle nach einem der vorhergehenden Ansprüche, bei der die poröse Wasserstoffelektrodenschicht aus einer Mischung von NiO und stabilisiertem Zirkon und/oder substituiertem Zeroxid ist.

9. Zelle nach einem der vorhergehenden Ansprüche, bei der die dichte Elektrolyt-schicht aus stabilisiertem Zirkon ist.

10. Zelle nach einem der vorhergehenden Ansprüche, bei der die Reaktionsbarrierenschicht aus substituiertem Zeroxid ist.

11. Zelle nach einem der vorhergehenden Ansprüche, bei der die poröse Sauerstoff- oder Luftelektrodenschicht aus substituiertem Zeroxid und aus einem Sauerstoff- oder Luftelektrodenmaterial ist.

12. Verfahren zur Herstellung einer elektrochemischen Zelle mit einem Metallsubstrat, umfassend :
- ein poröses Metallsubstrat (41) mit einer ersten Hauptfläche und einer zweiten Hauptfläche ;
- eine poröse thermomechanische Adaptionsschicht (42) auf der genannten zweiten Hauptfläche ;
- eventuell eine poröse Chrom-Diffusionsbarrierenschicht (43) auf der genannten porösen thermomechanischen Adaptationsschicht ;
- eine poröse Wasserstoffelektrodenschicht (44) auf der genannten porösen Chrom-Diffusionsbarrierenschicht ;
- eine dichte Elektrolyt-Schicht (45) auf der genannten porösen Wasserstoffelektrodenschicht ;
- eine dichte oder poröse Reaktionsbarrierenschicht (46) auf der genannten dichten Elektrolyt-Schicht (45) ;
- eine poröse Sauerstoff- oder Luftelektrodenschicht (47) auf der genannten Reaktionsbarrierenschicht (46) ;
wobei, bei diesem Verfahren, :
a) man ein grünes poröses Metallsubstrat herstellt ; dann
b) man im grünen Zustand auf der zweiten Hauptfläche des grünen porösen Metallsubstrats sukzessive abscheidet:
- eine poröse thermomechanische Adaptionsschicht,
- eventuell eine poröse Chrom-Diffusionsbarrierenschicht ;
- eine poröse Wasserstoffelektrodenschicht ;
- eine dichte Elektrolytschicht ;
- eine dichte oder poröse Reaktionsbarrierenschicht ; und
- eine poröse Sauerstoff- oder Luftelektrodenschicht ;
c) man ein simultanes Sintern des grünen porösen Metallsubstrats und aller abgeschiedenen Schichten im grünen Zustand auf einmal durchführt.

13. Verfahren nach Anspruch 12, bei dem die Schichten durch ein Verfahren abgeschieden werden, das man auswählt unter Siebdruck, Bandguss, Pressen, Thermopressen, Sputtern bzw. Zerstäubung, und Zentrifugalbeschichtung.

14. Verfahren nach Anspruch 12 oder 13, bei dem der Sinterschritt c) unter einer kontrollierten Atmosphäre stattfindet, zum Beispiel eine sehr schwach oxidierende Atmosphäre.

15. Verfahren nach einem der Ansprüche 12 bis 14, bei dem der Sinterschritt c) bei einer Temperatur von 600 °C bis 1600 °C, vorzugsweise 800 °C bis 1400°C stattfindet.

16. Verfahren nach einem der Ansprüche 12 bis 15, bei dem der Sinterschritt c) einen Schritt zur Bindungsauflösung unter Luft, sodann den eigentlichen Sinterschritt unter kontrollierter Atmosphäre, zum Beispiel einer sehr schwach oxidierenden Atmosphäre, umfasst.

## Claims

1. A metal-supported electrochemical cell comprising:
- a porous metal support (41) comprising a first main surface and a second main surface;
- a porous thermomechanical adaptive layer (42), on said second main surface;
- a porous layer, barrier against chromium diffusion (43), on said porous thermomechanical adaptive layer, this porous layer, barrier against chromium diffusion, being made of stabilised zirconia and/or of substituted ceria, and of a mixed oxide of spinel structure;
- a porous hydrogen electrode layer (44), on said porous layer, barrier against chromium diffusion;
- a dense electrolyte layer (45), on said porous hydrogen electrode layer;
- a dense or porous reaction barrier layer (46), on said dense electrolyte layer (45);
- a porous oxygen or air electrode layer (47), on said reaction barrier layer (46).

2. The metal-supported electrochemical cell according to claim 1, wherein the first main surface and the second main surface are planar and parallel surfaces.

3. The metal-supported electrochemical cell according to claim 2, wherein the first main surface is a lower surface and the second main surface is an upper surface, and the layers are successively stacked on the second main surface.

4. The metal-supported electrochemical cell according to any one of the preceding claims, wherein the porosity of the porous metal support and of the porous layers is 20 to 70 %, preferably 20 to 60 % by volume, and the porosity of the dense layer(s) is less than 6 % by volume.

5. The cell according to any one of the preceding claims wherein the distance between the first main surface and the second main surface of the porous metal support is equal to or less than 1 mm, preferably it is from 200 to 1000 µm, more preferably from 400 to 500 µm.

6. The cell according to any one of the preceding claims, wherein the porous metal support is made of a metal chosen from among iron, iron-based alloys, chromium, chromium-based alloys, iron-chromium alloys, stainless steels for example chromium-forming stainless steels, nickel, nickel-based alloys, nickel chromium alloys, cobalt containing alloys, manganese containing alloys, aluminium containing alloys.

7. The cell according to any one of the preceding claims, wherein the porous thermomechanical adaptive layer is made of a metal, preferably identical to the metal of the porous metal support, and of an ion conductor such as stabilised zirconia and/or substituted ceria.

8. The cell according to any one of the preceding claims, wherein the porous hydrogen electrode layer is made of a mixture of NiO, and of stabilised zirconia and/or substituted ceria.

9. The cell according to any one of the preceding claims, wherein the dense electrolyte layer is made of stabilised zirconia.

10. The cell according to any one of the preceding claims, wherein the reaction barrier layer is made of substituted ceria.

11. The cell according to any one of the preceding claims, wherein the porous oxygen or air electrode layer is made of substituted ceria and of an oxygen or air electrode material.

12. A method for preparing a metal-supported electrochemical cell comprising:
- a porous metal support (41) comprising a first main surface and a second main surface;
- a porous thermomechanical adaptive layer (42), on said second main surface;
- optionally a porous layer, barrier against chromium diffusion (43), on said porous thermomechanical adaptive layer;
- a porous hydrogen electrode layer (44), on said porous layer, barrier against chromium diffusion;
- a dense electrolyte layer (45), on said porous hydrogen electrode layer;
- a dense or porous reaction barrier layer (46), on said dense electrolyte layer (45);
- a porous oxygen or air electrode layer (47), on said reaction barrier layer (46);
a method in which:
a) a green porous metal support is prepared; then
b) the following are successively deposited in the green state on the second main surface of the green porous metal support:
- a porous thermomechanical adaptive layer;
- optionally a porous layer, barrier against chromium diffusion;
- a porous hydrogen electrode layer;
- a dense electrolyte layer;
- a dense or porous reaction barrier layer; and
- a porous oxygen or air electrode layer;
c) simultaneous sintering, in a single operation, of the green porous metal support and of all the deposited layers in the green state, is carried out.

13. The method according to claim 12, wherein the layers are deposited using a process chosen from among screen printing, tape casting, pressing, hot pressing, spraying and spin coating.

14. The method according to claim 12 or 13, wherein the sintering step c) is conducted under a controlled atmosphere for example a very slightly oxidizing atmosphere.

15. The method according to any one of claims 12 to 14, wherein the sintering step c) is conducted at a temperature of 600°C to 1600°C, preferably from 800°C to 1400°C.

16. The method according to any one of claims 12 to 15 wherein the sintering step c) comprises a de-binding step in air followed by an actual sintering step under a controlled atmosphere, for example a very slightly oxidizing atmosphere.
